# EUROPÄISCHE PATENTSCHRIFT

(11) **EP 3 466 778 B1**
(45) Veröffentlichungstag und Bekanntmachung des Hinweises auf die Patenterteilung: **09.12.2020**
(21) Anmeldenummer: 18195398.5
(22) Anmeldetag: 19.09.2018
(51) Int. Cl.: B60T 7/10, B60R 21/09, G05G 1/04

(54) **VORRICHTUNG ZUM BEWEGEN EINES BETÄTIGUNGSHEBELS EINER HANDBREMSE EINES AUTOMOBILS**
DEVICE FOR MOVING AN OPERATING LEVER OF A HAND BRAKE OF AN AUTOMOBILE
DISPOSITIF DE DÉPLACEMENT D'UN LEVIER DE COMMANDE D'UN FREIN À MAIN D'UN VÉHICULE AUTOMOBILE

(30) Priorität: 04.10.2017 DE 102017122975
(43) Veröffentlichungstag der Anmeldung: 10.04.2019
(73) Patentinhaber: Aguti Produktentwicklung & Design GmbH, 88085 Langenargen (DE)
(72) Erfinder: Rogg, Christian, 88142 Wasserburg (DE)
(74) Vertreter: Otten, Roth, Dobler & Partner mbB Patentanwälte

(56) Entgegenhaltungen:
- EP-A1- 0 466 534
- DE-A1- 19 758 207
- DE-U1- 20 009 211
- US-A1- 2009 193 929
- US-B1- 9 650 102

## Beschreibung

### Stand der Technik

Vorrichtungen zu Bewegen einer Handbremse, insbesondere Klappvorrichtungen sind bekannt. Eine bekannte Vorrichtung umfasst eine Schwenkachse, welche senkrecht zu einer Bewegungsrichtung eines Handbremshebels vorhanden ist, sodass der Handbremshebel, oder Teile des Handbremshebels nach vorne unten oder nach oben hinten wegklappbar ist. Die Vorrichtung ist somit derart vorhanden, dass die Handbremse parallel zu einer Feststellbewegungsrichtung des Handbremshebels schwenkbar vorhanden ist, um z.B. eine Verschiebebewegung oder eine Drehbewegung eines in einem Bereich um die Handbremse vorhandenen Fahrzeugsitzes zu ermöglichen bzw. einen Bewegungsbereich zu vergrößern. Die EP 466 534 B1 zeigt einen Handbremsbedienhebel, mittels welchem eine Entriegelung der Bremse durch eine Drehung eines Griffteils bedienbar ist.

### Aufgabe und Vorteile der Erfindung

Der Erfindung liegt die Aufgabe zugrunde eine alternative Vorrichtung zum Bewegen eines Betätigungshebels einer Handbremse eines Automobils bereitzustellen.

Diese Aufgabe wird durch die Merkmale des unabhängigen Anspruchs 1 gelöst.

In den abhängigen Ansprüchen sind vorteilhafte und zweckmäßige Ausführungsformen der Erfindung genannt.

Die Erfindung geht von einer Vorrichtung zum Bewegen eines Betätigungshebels einer Handbremse eines Automobils aus.

Die Vorrichtung ist beispielsweise als eine Bewegungsvorrichtung, z.B. als eine Schwenkvorrichtung, insbesondere als eine Handbremsenbetätigungselement-Bewegungsvorrichtung ausgebildet. Bevorzugterweise ist die Vorrichtung als eine Handbremsschwenkeinrichtung und/oder eine Handbremsklappeinrichtung ausgebildet, z.B. als eine Fahrzeughandbremsen-Bewegungseinrichtung und/oder als eine Fahrzeughandbremsen-Schwenkeinrichtung.

Das Automobil ist beispielsweise als ein Fahrzeug, ein Auto, ein Lastkraftwagen, ein Wohnmobil, ein Arbeitsgerät, wie z.B. ein Bagger oder Sitz-Rasenmäher, und/oder als ein Reisemobil vorhanden.

Der wesentliche Aspekt der Erfindung ist nun darin zu sehen, dass die Vorrichtung Verbindungsmittel aufweist, wobei ein Verbindungsorgan der Verbindungsmittel dazu ausgebildet ist, die Vorrichtung an einem Montageorgan eines Automobils anzuordnen, wobei ein Verbindungselement der Verbindungsmittel dazu vorgesehen ist, die Vorrichtung an einem Montageelement der Handbremse anzuordnen, wobei das Montageorgan zur Befestigung der Handbremse am Automobil ausgebildet ist, wobei das Montageelement zur Befestigung der Handbremse am Montageorgan des Automobils vorgesehen ist, wobei die Vorrichtung Schwenkmittel aufweist, wobei die Schwenkmittel eine Schwenkachse umfassen, sodass im angeordneten Zustand der Vorrichtung und der Handbremse am Automobil der Betätigungshebel der Handbremse um die Schwenkachse parallel zu einer Bedienebene des Betätigungshebels schwenkbar vorhanden ist. Hierdurch ist ein Verschwenken, z.B. ein Abklappen der Handbremse, insbesondere ein Verschwenken und/oder Abklappen einer Betätigungseinheit der Handbremse vergleichsweise einfach realisiert. Im angeordneten Zustand der Vorrichtung am Automobil ist die Schwenkachse der Vorrichtung beispielsweise parallel zu einer Fahrtrichtung des Automobils ausgebildet. Die Schwenkachse der Vorrichtung ist im angeordneten Zustand beispielsweise parallel zu einem Fahrzeugboden des Automobils vorhanden. Am Fahrzeugboden ist vorteilhafterweise der Fahrzeugsitz, insbesondere ein Fahrzeugsitzunterbau, z.B. einem Sitzkasten, montiert.

Die Handbremse ist beispielsweise als eine herkömmliche Handbremse ausgebildet, z.B. als eine herkömmliche Auto-Handbremse oder eine herkömmliche Wohnmobil-Handbremse. Die Handbremse umfasst beispielsweise einen Betätigungshebel, z.B. einen Bedienhebel, welcher in verschiedenen Raststellungen an der Handbremse verrastbar vorhanden ist und welcher z.B. mittels eines Bautenzugs oder eines Bremszugs bzw. eines Seilzugs mit einer Feststelleinrichtung zum Blockieren einer Bewegung eines Rads des Automobils in bekannter Art und Weise zusammenwirkt. Vorteilhafterweise umfasst die Handbremse zumindest zwei Raststellungen, in einer Raststellung der Handbremse ist eine Blockierung des Rads des Automobils gelöst und in der zweiten Raststellung ist das Rad des Automobils blockiert. Vorstellbar ist weiterhin, dass zwischen der ersten und der zweiten Raststellung mehrere, weitere Raststellung vorhanden sind.

Die Vorrichtung ist vorteilhafterweise derart vorhanden, dass sie nachträglich zwischen der Handbremse und dem Automobil, insbesondere zwischen dem Montageorgan und dem Montageelement, anordenbar ist. Insbesondere ist die Vorrichtung nachträglich am Montageelement der Handbremse und dem Montageorgan des Automobils montierbar. Beispielsweise ist die Handbremse herkömmlicherweise mit dem Montageelement am Montageorgan des Automobils befestigbar. Zum Beispiel umfasst das Montagelement und das Montageorgan Befestigungselemente, z.B. sogenannte Anschraubpunkte, mittels welchen das Montageelement und das Montageorgan miteinander verbindbar, z.B. verschraubbar sind. Bevorzugterweise ist die Vorrichtung an diesen Befestigungselementen mit dem Montageelement der Handbremse und/oder dem Montageorgan des Automobils verbindbar, z.B. verschraubbar.

Das Montageorgan des Automobils ist vorteilhafterweise an einem Fahrzeugsitz des Automobils, insbesondere an einem Fahrzeugsitzunterbau des Fahrzeugsitzes vorhanden. Der Fahrzeugsitz ist beispielsweise als ein Fahrersitz ausgebildet. Denkbar ist weiterhin, dass der Fahrzeugsitz bewegbar, z.B. drehbar und verschiebbar vorhanden ist. Beispielsweise ist zwischen dem Fahrzeugsitzunterbau und dem Fahrzeugsitz eine Dreh- und/oder Verschiebeeinheit vorhanden.

Vorstellbar ist außerdem, dass die am Fahrzeugsitz angeordnete Handbremse in einer Funktionsstellung in eine Verschiebeebene und/oder eine Schwenkebene des Fahrzeugsitzes hineinragt, sodass eine Bewegung des Fahrzeugsitzes blockiert und/oder verhindert ist und/oder ein Bewegungsbereich des Fahrzeugsitzes eingeschränkt ist. Durch die vorgeschlagene Vorrichtung ist die Handbremse vergleichsweise einfach aus der Verschiebeebene und/oder der Schwenkebene, insbesondere dem Verschiebebereich und/oder dem Schwenkbereich des Fahrzeugsitzes wegbewegbar, sodass ein Bewegungsbereich des Fahrzeugsitzes vergrößert ist.

Denkbar ist weiterhin, dass das Montageorgan des Fahrzeugs an einem Fahrzeugboden des Fahrzeugs ausgebildet ist.

Weiter wird vorgeschlagen, dass die Vorrichtung Verriegelungsmittel aufweist, wobei die Verriegelungsmittel die Schwenkmittel der Vorrichtung in zumindest einer Rastposition lösbar festlegen, wobei im angeordneten Zustand der Vorrichtung zwischen Automobil und Handbremse der Betätigungshebel der Handbremse in der Rastposition der Schwenkmittel in einer Raststellung vorhanden ist. Hierdurch ist eine vergleichsweise gewohnte, herkömmliche Benutzung der Handbremse durch einen Nutzer realisiert.

Die Verriegelungsmittel fixieren die Schwenkmittel beispielsweise derart in der Rastposition, dass die Handbremse in einer Ausrichtung vorhanden ist, welche einer Ausrichtung der Handbremse im angeordneten Zustand am Automobil ohne angeordnete, beispielsweise dazwischen vorhandene, Vorrichtung entspricht.

Außerdem erweist es sich von Vorteil, dass die Schwenkmittel genau eine Schwenkachse aufweisen. Hierdurch ist die Vorrichtung vergleichsweise einfach ausgebildet.

Vorteilhafterweise ist die Schwenkachse derart an der Vorrichtung vorhanden, dass die Handbremse nach seitlich unten wegschwenkbar und/oder weggklappbar ist.

Das Verbindungselement und/oder das Verbindungsorgan der Vorrichtung ist vorteilhafterweise plattenartig ausgebildet, z.B. als eine Metallplatte. Die Schwenkachse der Schwenkmittel erstreckt sich bevorzugterweise parallel zu einer Erstreckungsebene einer Hauptseite des plattenartigen Verbindungselements und/oder zu einer Hauptseite des plattenartigen Verbindungsorgans und ist beispielsweise an einem Randbereich der Verbindungsorgans und/oder eine Randbereich des Verbindungselements vorhanden. Zum Beispiel ist die Schwenkachse an einem Randbereich einer der Hauptseiten des Verbindungselements und/oder des Verbindungsorgans ausgebildet.

Beispielsweise verbinden die Schwenkmittel das Verbindungselement und das Verbindungsorgan der Vorrichtung beweglich miteinander. Vorteilhafterweise verbinden die Schwenkmittel das Verbindungselement und das Verbindungsorgan der Vorrichtung in einer Weise, dass im geschlossenen Zustand der Vorrichtung eine Hauptseite des Verbindungselements und eine Hauptseite des Verbindungsorgans aneinander anliegend vorhanden ist. Denkbar ist, dass das Verbindungsorgan, das Verbindungselement und die Schwenkmittel, insbesondere die Vorrichtung, in der Art eines herkömmlichen Scharniers vorhanden sind.

Auch erweist es sich von Vorteil, dass die Schwenkmittel ein Viergelenk umfassen. Durch das Viergelenk ist eine vergleichsweise stabile Schwenkverbindung des Verbindungselements mit dem Verbindungsorgan realisiert.

Als vorteilhaft erweist sich außerdem, dass die Verriegelungsmittel derart ausgebildet sind, die Schwenkmittel in zumindest zwei oder mehr Rastpositionen lösbar festzulegen.

Beispielsweise ist das Verbindungselement relativ zum Verbindungsorgan um einen definierten Winkelbereich, insbesondere in diskreten Winkelschritten schwenkbar vorhanden, z.B. in einem Winkelbereich zwischen 0° und 120°, zwischen 0° und 90° oder zwischen 0° und 60°. Vorteilhafterweis ist das Verbindungselement relativ um Verbindungsorgan in Winkelschritten von 5°, 10°, 15°, 20°, 25°, 30° und/oder 90° schwenkbar. Im angeordnet Zustand der Vorrichtung zwischen Automobil und Handbremse des Automobils ist der Betätigungshebel durch die angeordnete Vorrichtung vorteilhafterweise um eine Winkelbereich um die Schwenkachse der Vorrichtung entsprechend vorangegangen angegebenem Winkelbereich und/oder Winkelschritten schwenkbar vorhanden.

In einer vorteilhaften Ausführungsform der Erfindung umfassen die Verriegelungsmittel einen Rastbolzen. Durch den Rastbolzen ist eine vergleichsweise stabile Verrastung des Verbindungselements und des Verbindungsorgans der Vorrichtung in der Rastposition realisiert.

Von Vorteil erweist sich auch, dass die Verriegelungsmittel dazu ausgebildet sind, selbsttätig, insbesondere automatisch zu verriegeln. Hierdurch ist eine vergleichsweise einfache Handhabung der Vorrichtung verwirklicht.

In einer vorteilhaften Modifikation der Erfindung ist die Vorrichtung derart ausgebildet, dass im angeordneten Zustand der Vorrichtung der Betätigungshebel der Handbremse im angezogenen Zustand der Handbremse, insbesondere im festgelegten Zustand der Handbremse, schwenkbar ist. Im angezogenen Zustand der Handbremse ist ein Rad des Automobils blockiert.

### Beschreibung von Ausführungsbeispielen

Mehrere Ausführungsbeispiele werden anhand der nachstehenden Zeichnungen unter Angabe weitere Einzelheiten und Vorteile näher erläutert.

### Es zeigen:

- Figuren 1 bis 2:: Eine Rückansicht auf einen Fahrzeugsitz mit einer ersten Variante einer erfindungsgemäßen Vorrichtung,
- Figur 3:: Eine Teilrückansicht auf den Fahrzeugsitz nach den Figuren 1 und 2, wobei der Fahrzeugsitz in einem verschobenen Zustand dargestellt ist und die Vorrichtung weggeklappt ist,
- Figuren 4 und 5:: Eine Rückansicht auf einen Fahrzeugsitz mit einer zweiten Variante einer erfindungsgemäßen Vorrichtung und
- Figur 6:: Eine Teilrückansicht auf den Fahrzeugsitz nach den Figuren 3 und 4, wobei der Fahrzeugsitz in einem verschobenen Zustand dargestellt ist und die Vorrichtung weggeklappt ist.

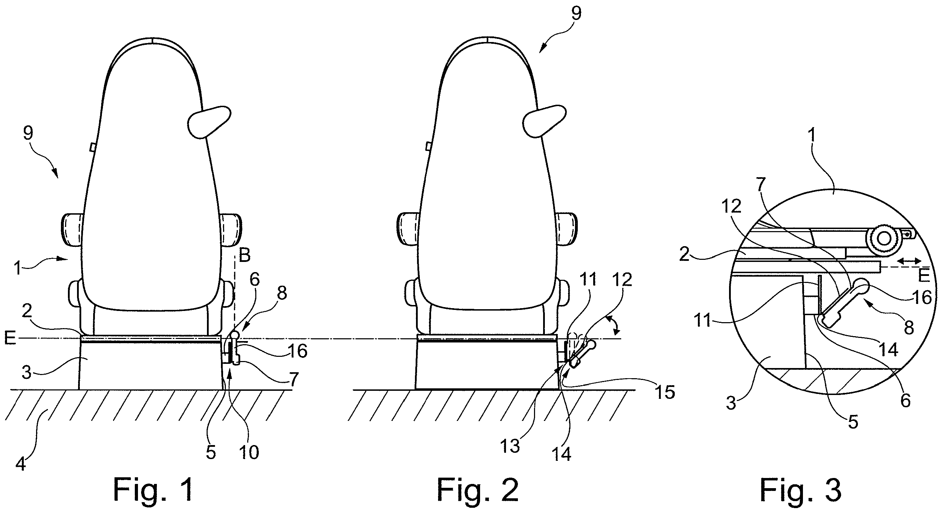

Figuren 1 und 2 zeigen eine Rückansicht eines Fahrzeugsitzes 1 eines Automobils 9, welcher über eine Dreh-/Schiebe-Einheit 2 und einen Sitzkasten 3 auf einem Fahrzeugboden 4 montiert ist. An einer Sitzkastenseite 5 ist ein Montageorgan 6 vorhanden, an welchem ein Montageelement 7 einer Handbremse 8 befestigbar ist. Zwischen dem Sitzkasten 3 und der Handbremse 8 bzw. zwischen dem Montageorgan 6 und dem Montageelement 7 ist eine erfindungsgemäße Vorrichtung 10 montiert.

Die Vorrichtung 10 umfasst ein Verbindungsorgan 11 und ein Verbindungselement 12, welche durch Schwenkmittel 13 mit einer Schwenkachse 14 beweglich miteinander verbunden sind. Das Verbindungsorgan 11 und das Verbindungselement 12 sind in der Form einer Platte oder einer Scheibe ausgebildet. Das Verbindungsorgan 11 ist mit dem Montageorgan 6 und das Verbindungselement 12 ist mit dem Montageelement 7 verbunden.

In Figur 1 ist ein Betätigungshebel 16 der Handbremse 8 in einer Raststellung gezeigt, in welcher eine Bewegung eines Rads des Automobils (nicht dargestellt) blockiert ist. In dieser Raststellung ragt der Betätigungshebel 16 in eine Bewegungsebene E der Dreh-/Schiebe-Einheit 2 bzw. schneidet die Bewegungsebene E, wodurch ein Bewegungsbereich der Dreh-/Schiebe-Einheit 2 und damit des Fahrzeugsitzes 1 eingeschränkt ist. Der Betätigungshebel 16 der Handbremse 8 ist von einer Raststellung, z.B. der in Figur 1 dargestellten Raststellung in eine weiter Raststellung, in welcher das Rad des Automobils z.B. frei beweglich vorhanden ist, (nicht dargestellt) in einer Bewegungsebene B beweglich, insbesondere verschwenkbar vorhanden.

Die Schwenkachse 14 der Vorrichtung 10 ist vorteilhafterweise derart an der Vorrichtung 10 ausgebildet, dass die Schwenkachse 14 im angeordneten Zustand der Vorrichtung 10 (Figuren 1 bis 3) parallel zum Fahrzeugboden 4 und parallel zur Bewegungsebene B des Betätigungshebels 16 angeordnet ist.

Im Bereich der Schwenkachse 13, insbesondere an der Schwenkachse 13 sind beispielsweise Verriegelungsmittel 15 vorhanden. Durch die Verriegelungsmittel 15 ist eine Schwenkstellung des Verbindungsorgans 11 relativ zum Verbindungselement 12 festlegbar, beispielsweise indem eine Bewegung der Schwenkmittel 13 durch die Verriegelungsmittel 15 unterbunden bzw. blockiert ist. Die Vorrichtung 10, insbesondere eine Schwenkstellung des Verbindungsorgans 11 relativ zum Verbindungselement 12, ist derart durch die Verriegelungsmittel 15 fixierbar, sodass die Handbremse 8 in einer für einen Nutzer herkömmlichen Weise bedienbar vorhanden ist (Figur 1). Die Verriegelungsmittel 15 sind außerdem beispielsweise in einer Weise ausgebildet, sodass das Verbindungselement 12 relativ zum Verbindungsorgan 11 in insbesondere diskreten Winkelschritten verschwenkbar ist (Figur 2). Im angeordneten Zustand ist damit die Handbremse 8 in insbesondere diskreten Winkelschritten beispielsweise gegenüber der Sitzkastenseite 5 verschwenkbar (Figur 2). Vorteilhafterweise ist die Vorrichtung 10 derart ausgebildet, dass der Betätigungshebel 16 der Handbremse 8 aus der Bewegungsebene E der Dreh-/Schiebe-Einheit 2 herausschwenkbar, insbesondere abklappbar ist, sodass der Bewegungsbereich der Dreh-/Schiebe-Einheit 2 und damit insbesondere des Fahrzeugsitzes 1 vergrößert ist. Beispielsweise kann im abgeklappten Zustand des Betätigungshebels 16 der Fahrzeugsitz 1 in der Bewegungsebene in Richtung Betätigungshebel 16 über den Betätigungshebel 16 verschoben werden (Figur 3).

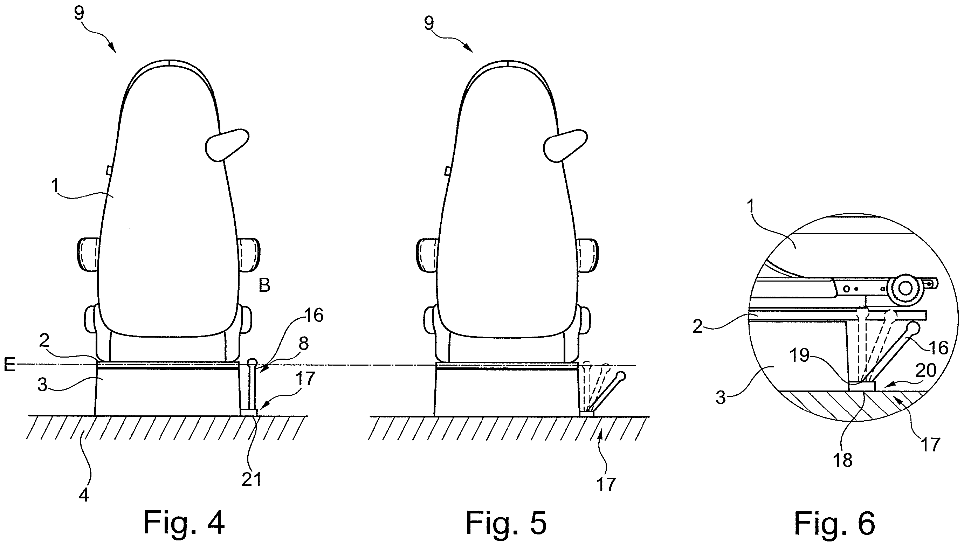

In den Figuren 4 bis 6 ist eine weitere vorteilhafte Ausführungsform einer Vorrichtung 17 gezeigt. Die Vorrichtung 17 unterscheidet sich von der Vorrichtung 10 z.B. dahingehend, dass sie dazu ausgebildet ist, die Handbremse 8 statt an der Sitzkastenseite 5 am Fahrzeugboden 4 zu montieren. Die Vorrichtung 17 umfasst ebenfalls ein Verbindungselement 19, ein Verbindungsorgan 18 und Schwenkmittel 20. In der Variante nach den Figuren 4 bis 6 umfasst der Fahrzeugboden ein Montageorgan 21, um die Handbremse 8 bzw. die Vorrichtung 17 zu befestigen.

### Bezugszeichenliste

- 1: Fahrzeugsitz
- 2: Dreh-/Schiebe-Einheit
- 3: Sitzkasten
- 4: Fahrzeugboden
- 5: Sitzkastenseite
- 6: Montageorgan
- 7: Montageelement
- 8: Handbremse
- 9: Automobil
- 10: Vorrichtung
- 11: Verbindungsorgan
- 12: Verbindungselement
- 13: Schwenkmittel
- 14: Schwenkachse
- 15: Verriegelungsmittel
- 16: Betätigungshebel
- 17: Vorrichtung
- 18: Verbindungsorgan
- 19: Verbindungselement
- 20: Schwenkmittel
- 21: Montageorgan

## Patentansprüche

1. Vorrichtung (10, 17) zum Bewegen eines Betätigungshebels (16) einer Handbremse (8) eines Automobils (9), wobei der Betätigungshebel (16) der Handbremse (8) als ein Bedienhebel vorhanden ist, wobei der Betätigungshebel (16) in verschiedenen Raststellungen an der Handbremse (8) verrastbar vorhanden ist und welcher mit einer Feststelleinrichtung zum Blockieren einer Bewegung eines Rads des Automobils (9) zusammenwirkt, wobei in einer Raststellung des Betätigungshebels (16) eine Blockierung des Rads des Automobils (9) gelöst ist und in einer zweiten Raststellung das Rad des Automobils (9) blockiert ist, **dadurch gekennzeichnet, dass**
die Vorrichtung (10, 17) Verbindungsmittel aufweist, wobei ein Verbindungsorgan (11, 18) der Verbindungsmittel dazu ausgebildet ist, die Vorrichtung (10, 17) an einem Montageorgan (6) eines Automobils (9) anzuordnen, wobei ein Verbindungselement (12, 19) der Verbindungsmittel dazu vorgesehen ist, die Vorrichtung (10, 17) an einem Montageelement (7) der Handbremse (8) anzuordnen, wobei das Montageorgan (6) zur Befestigung der Handbremse (8) am Automobil (9) ausgebildet ist, wobei das Montageelement (7) zur Befestigung der Handbremse (8) am Montageorgan (6) des Automobils (9) vorgesehen ist, wobei die Vorrichtung (10, 17) Schwenkmittel (13) aufweist, wobei die Schwenkmittel (13) eine Schwenkachse (14) umfassen, sodass im angeordneten Zustand der Vorrichtung (10, 17) und der Handbremse (8) am Automobil (9) der Betätigungshebel (16) der Handbremse (8) um die Schwenkachse (14) schwenkbar vorhanden ist, wobei die Schwenkachse (14) parallel zu einer Bedienebene B des Betätigungshebels (16) ausgerichtet ist.

2. Vorrichtung (10, 17) nach Anspruch 1,
**dadurch gekennzeichnet, dass** die Vorrichtung (10, 17) Verriegelungsmittel (15) aufweist, wobei die Verriegelungsmittel (15) die Schwenkmittel (13) in zumindest einer Rastposition lösbar festlegen, wobei im angeordneten Zustand der Vorrichtung (10, 17) zwischen Automobil (9) und Handbremse (8) der Betätigungshebel (16) der Handbremse (8) in der Rastposition in einer Raststellung vorhanden ist.

3. Vorrichtung (10, 17) nach einem der vorangegangenen Ansprüche, **dadurch gekennzeichnet, dass** die Schwenkmittel (13) genau eine Schwenkachse (14) aufweisen.

4. Vorrichtung (10, 17) nach einem der vorangegangenen Ansprüche, **dadurch gekennzeichnet, dass** die Schwenkmittel (13) ein Viergelenk umfassen.

5. Vorrichtung (10, 17) nach einem der vorangegangenen Ansprüche, **dadurch gekennzeichnet, dass** die Verriegelungsmittel (15) derart ausgebildet sind, die Schwenkmittel (13) in zumindest zwei oder mehr Rastpositionen lösbar festzulegen.

6. Vorrichtung (10, 17) nach einem der vorangegangenen Ansprüche, **dadurch gekennzeichnet, dass** die Verriegelungsmittel (15) einen Rastbolzen umfassen.

7. Vorrichtung (10, 17) nach einem der vorangegangenen Ansprüche, **dadurch gekennzeichnet, dass** die Verriegelungsmittel (15) dazu ausgebildet sind, selbsttätig zu verriegeln.

8. Vorrichtung (10, 17) nach einem der vorangegangenen Ansprüche, **dadurch gekennzeichnet, dass** die Vorrichtung (10, 17) derart ausgebildet ist, dass im angeordneten Zustand der Vorrichtung (10, 17) zwischen Automobil (9) und Handbremse (8) der Betätigungshebel (16) der Handbremse (8) im festgelegten Zustand der Handbremse (8) schwenkbar ist.

9. Verwendung einer Vorrichtung (10, 17) nach einem der vorangegangenen Ansprüche zur beweglichen Lagerung des Betätigungshebels (16) der Handbremse (8) am Automobil.

10. Handbremse (8) mit einer Vorrichtung (10, 17) nach einem der vorangegangenen Ansprüche 1 bis 8.

11. Automobil (9), insbesondere Wohnmobil oder Reisemobil, mit einer Vorrichtung (10, 17) nach einem der vorangegangenen Ansprüche 1 bis 8 und/oder einer Handbremse (8) nach dem vorangegangenen Anspruch 10.

## Claims

1. Device (10, 17) for moving an actuation lever (16) of a handbrake (8) of an automobile (9),wherein the actuation lever (16) of the handbrake (8) is provided as an operating lever, wherein the actuation lever (16) is provided so as to be able to be latched in different latching positions on the handbrake (8) and interacts with a fixing installation for blocking a movement of a wheel of the automobile (9), wherein blocking of the wheel of the automobile (9) is released in one latching position of the actuation lever (16) and the wheel of the automobile (9) is blocked in a second latching position,
**characterized in that**
the device (10, 17) has connection means, wherein a connection member (11, 18) of the connection means is configured to arrange the device (10, 17) on an assembly member (6) of an automobile (9), wherein a connection element (12, 19) of the connection means is provided to arrange the device (10, 17) on an assembly element (7) of the handbrake (8), wherein the assembly member (6) is configured to secure the handbrake (8) to the automobile (9), wherein the assembly element (7) is provided to secure the handbrake (8) to the assembly member (6) of the automobile (9), wherein the device (10, 17) has pivot means (13), wherein the pivot means (13) comprise a pivot axis (14) so that in the arranged state of the device (10, 17) and the handbrake (8) on the automobile (9) the actuation lever (16) of the handbrake (8) is provided so as to be able to be pivoted about the pivot axis (14), wherein the pivot axis (14) is aligned so as to be parallel to an operating plane B of the actuation lever (16).

2. Device (10, 17) according to Claim 1, **characterized in that** the device (10, 17) has locking means (15), wherein the locking means (15) releasably secure the pivot means (13) in at least one locking position, wherein, in the arranged state of the device (10, 17) between the automobile (9) and handbrake (8), the actuation lever (16) of the handbrake (8) in the locking position is provided in a locking position.

3. Device (10, 17) according to one of the preceding claims, **characterized in that** the pivot means (13) have precisely one pivot axis (14).

4. Device (10, 17) according to one of the preceding claims, **characterized in that** the pivot means (13) comprise a four-bar linkage.

5. Device (10, 17) according to one of the preceding claims, **characterized in that** the locking means (15) are configured in such a manner so as to releasably fix the pivot means (13) in at least two or more locking positions.

6. Device (10, 17) according to one of the preceding claims, **characterized in that** the locking means (15) comprise a locking pin.

7. Device (10, 17) according to one of the preceding claims, **characterized in that** the locking means (15) are configured for locking in a self-acting manner.

8. Device (10, 17) according to one of the preceding claims, **characterized in that** the device (10, 17) is configured in such a manner that, in the arranged state of the device (10, 17) between the automobile (9) and handbrake (8), the actuation lever (16) of the handbrake (8) is able to be pivoted in the secured state of the handbrake (8).

9. Use of a device (10, 17) according to one of the preceding claims for movably mounting the actuation lever (16) of the handbrake (8) on the automobile.

10. Handbrake (8) having a device (10, 17) according to one of the preceding Claims 1 to 8.

11. Automobile (9), in particular a mobile home or motor home, having a device (10, 17) according to one of the preceding Claims 1 to 8 and/or a handbrake (8) according to preceding Claim 10.

## Revendications

1. Dispositif (10, 17) pour déplacer un levier d'actionnement (16) d'un frein à main (8) d'une automobile (9), le levier d'actionnement (16) du frein à main (8) étant prévu en tant que levier de commande, le levier d'actionnement (16) étant prévu de manière à pouvoir s'encliqueter dans différentes positions d'encliquetage au niveau du frein à main (8) et lequel coopère avec un système de serrage pour bloquer un mouvement d'une roue de l'automobile (9), un blocage de la roue de l'automobile (9) étant libéré dans une position d'encliquetage du levier d'actionnement (16), et dans une deuxième position d'encliquetage, la roue de l'automobile (9) étant bloquée,
**caractérisé en ce que**
le dispositif (10, 17) présente des moyens de liaison, un organe de liaison (11, 18) des moyens de liaison étant réalisé de manière à agencer le dispositif (10, 17) au niveau d'un organe de montage (6) d'une automobile (9), un élément de liaison (12, 19) des moyens de liaison étant prévu pour agencer le dispositif (10, 17) au niveau d'un élément de montage (7) du frein à main (8), l'organe de montage (6) étant réalisé pour la fixation du frein à main (8) à l'automobile (9), l'élément de montage (7) étant prévu pour la fixation du frein à main (8) à l'organe de montage (6) de l'automobile (9), le dispositif (10, 17) présentant des moyens de pivotement (13), les moyens de pivotement (13) présentant un axe de pivotement (14), de telle sorte que dans l'état agencé du dispositif (10, 17) et du frein à main (8) sur l'automobile (9), le levier d'actionnement (16) du frein à main (8) soit prévu de manière à pouvoir pivoter autour de l'axe de pivotement (14), l'axe de pivotement (14) étant orienté parallèlement à un plan de commande B du levier d'actionnement (16).

2. Dispositif (10, 17) selon la revendication 1, **caractérisé en ce que** le dispositif (10, 17) présente des moyens de verrouillage (15), les moyens de verrouillage (15) fixant de manière desserrable les moyens de pivotement (13) dans au moins une position d'encliquetage, le levier d'actionnement (16) du frein à main (8) dans la position d'encliquetage étant prévu dans une position d'encliquetage dans l'état agencé du dispositif (10, 17) entre l'automobile (9) et le frein à main (8).

3. Dispositif (10, 17) selon l'une quelconque des revendications précédentes, **caractérisé en ce que** les moyens de pivotement (13) présentent exactement un axe de pivotement (14).

4. Dispositif (10, 17) selon l'une quelconque des revendications précédentes, **caractérisé en ce que** les moyens de pivotement (13) comprennent un quadrilatère articulé.

5. Dispositif (10, 17) selon l'une quelconque des revendications précédentes, **caractérisé en ce que** les moyens de verrouillage (15) sont réalisés de manière à fixer les moyens de pivotement (13) de manière desserrable dans au moins deux ou plus de deux positions d'encliquetage.

6. Dispositif (10, 17) selon l'une quelconque des revendications précédentes, **caractérisé en ce que** les moyens de verrouillage (15) comprennent un boulon d'encliquetage.

7. Dispositif (10, 17) selon l'une quelconque des revendications précédentes, **caractérisé en ce que** les moyens de verrouillage (15) sont réalisés de manière à verrouiller automatiquement.

8. Dispositif (10, 17) selon l'une quelconque des revendications précédentes, **caractérisé en ce que** le dispositif (10, 17) est réalisé de telle sorte que dans l'état agencé du dispositif (10, 17) entre l'automobile (9) et le frein à main (8), le levier d'actionnement (16) du frein à main (8) puisse pivoter dans l'état serré du frein à main (8) .

9. Utilisation d'un dispositif (10, 17) selon l'une quelconque des revendications précédentes pour le support déplaçable du levier d'actionnement (16) du frein à main (8) sur l'automobile.

10. Frein à main (8) comprenant un dispositif (10, 17) selon l'une quelconque des revendications précédentes 1 à 8.

11. Automobile (9), en particulier caravane ou camping-car, comprenant un dispositif (10, 17) selon l'une quelconque des revendications précédentes 1 à 8, et/ou un frein à main (8) selon la revendication 10 précédente.
